## Europäisches Patentamt
## European Patent Office
## Office européen des brevets

(19)

(11) Veröffentlichungsnummer: **0 140 066**
**B1**

(12)

# EUROPÄISCHE PATENTSCHRIFT

(45) Veröffentlichungstag der Patentschrift:
03.02.88

(51) Int. Cl.⁴: **G 01 L 1/20, G 01 L 23/22**

(21) Anmeldenummer: 84110674.3

(22) Anmeldetag: 07.09.84

(54) Einrichtung zum Erfassen von Kräften, Spannungen bzw. Beschleunigungen an Maschinen, Geräten oder dgl.

(30) Priorität: 15.09.83 DE 3333285

(43) Veröffentlichungstag der Anmeldung:
08.05.85 Patentblatt 85/19

(45) Bekanntmachung des Hinweises auf die Patenterteilung:
03.02.88 Patentblatt 88/5

(84) Benannte Vertragsstaaten:
DE FR GB IT

(56) Entgegenhaltungen:
DE-A-2 902 305
DE-A-2 917 406
DE-A-3 006 656

(73) Patentinhaber: ROBERT BOSCH GMBH, Postfach 50, D-7000 Stuttgart 1 (DE)

(72) Erfinder: Dobler, Klaus, Dr. Dipl.- Ing., Bettäckerstrasse 12, D-7016 Gerlingen (DE)
Erfinder: Heinz, Rudolf, Dr., Dipl.- Ing., Eltinger Weg 26, D-7253 Renningen (DE)

EP 0 140 066 B1

## Beschreibung

### Stand der Technik

Die Erfindung geht aus von einer Einrichtung nach der Gattund des Hauptanspruchs. Bei einer bekannten Einrichtung dieser Gattung (DE-A1-29 02 305) dient als elektrischer Meßwertgeber eine piezoelektrische Scheibe, welche mit zwei Druckringen verbunden und als Unterlegscheibe für eine Schraube ausgebildet ist. Bei einer anderen bekannten Einrichtung der gattungsmäßigen Art (DE-A1-30 06 656) ist ein Dichtring als Meßwertgeber ausgebildet, derart, daß zwischen zwei Elektrodenschichten ein Dielektrikum angeordnet ist. Beide Anordnungen benötigen insbesondere zum Erfassen von statischen Kräften, Drücken usw. einen hohen Isolationsaufwand, damit ein unkontrolliertes Abfließen von Ladungen vermieden wird. Nachteilig ist ferner, daß derartige aktive Meßwertgeber nur verhältnismäßig kleine Meßsignale liefern bei einer weiteren bekannten, gattungsgemäße Einrichtung (DE-A1-29 17 406) ist in eine Zylinderkopfdelrichtung eine aus Kohlepulver bestehende Widerstandsstücke eingebracht.

### Vorteile der Erfindung

Die erfindungsgemäße Anordnung mit den kennzeichnenden Merkmalen des Hauptanspruchs hat demgegenüber den Vorteil, daß der Meßwertgeber wesentlich stärkere Meßsignale liefert, welche unabhängig von der Änderungegeschwindigkeit der zu erfassenden Kräfte oder Spannungen sind. Der Meßwertgeber ist relativ einfach zu isolieren und zu kontaktieren und kann außerdem so klein bzw. dünn bemessen werden, daß er das ihn aufnehmende Bauteil nicht vergrößert.

Bei Verwendung eines Dickschichtwiderstands als niederohmiges Widerstandsbauelement lassen sich besonders hohe Meßsignale erzeugen und relativ einfach Mittel vorsehen, welche Temperatureinflüsse eliminieren. Grundsätziich können jedoch auch andere bekannte Widerstandsbauelemente eingesetzt werden, z. B. Kohleschichten oder Metalle.

Durch die in den Unteransprüchen enthaltenen Maßnahmen sind vorteilhafte Weiterbildungen der im Hauptanspruch angegebenen Anordnung möglich.

Der Meßwertgeber kann nach einem weiteren Vorschlag der Erfindung in ein handelsübliches Verbindungsmittel, wie Schraube oder Unterlegscheibe, eingebaut sein, welches beim Herstellen der Verbindung die innere Materialspannung erhält. In diesem Fall kann der Meßwertgeber als alleinige oder als zusätzliche Funktion auch das Herstellen der Verbindung als solches überwachen, z. B. beim Anziehen einer Schraube ein das Erreichen der maximal zulässigen Anzugskraft erzeugendes Signal auslösen.

Eine einfache Anordnung ergibt sich, wenn das Verbindungsmittel, wie Schraube oder Unterlegscheibe, zur Aufnahme des Meßwertgebers am Mantelumfang eine schlitzförmige Ausnehmung hat, in welcher das elektrische Bauelement des Meßwertgebers, gegebenenfalls zusammen mit einem Trägermaterial, wie Keramik, durch eine eingegossene dauerelastische Füllmasse, wie z. B. Araldit, festgelegt ist.

Der Meßwertgeber kann gegebenenfalls auch in einen Dichtring eingebaut sein, der durch die Verbindungemittel und durch Betriebskräfte beansprucht wird. Bei Brennkraftmaschinen kann der Meßwertgeber auch in die Zylinderkopfdichtung eingebaut sein.

### Zeichnung

Vier Ausführungsbeispiele der Erfindung sind in der Zeichnung dargestellt und in der nachfolgenden Beschreibung näher erläutert. Es zeigen Figur 1 einen Schnitt durch eine Unterlegscheibe, Figur 2 einen Schnitt durch einen Dichtring, Figur 3 eine Entlüftungsschraube für einen Druckbehälter und Figur 4 vereinfacht den Schnitt durch einen Zylinderkopf einer Brennkraftmaschine.

### Beschreibung der Ausführungsbeispiele

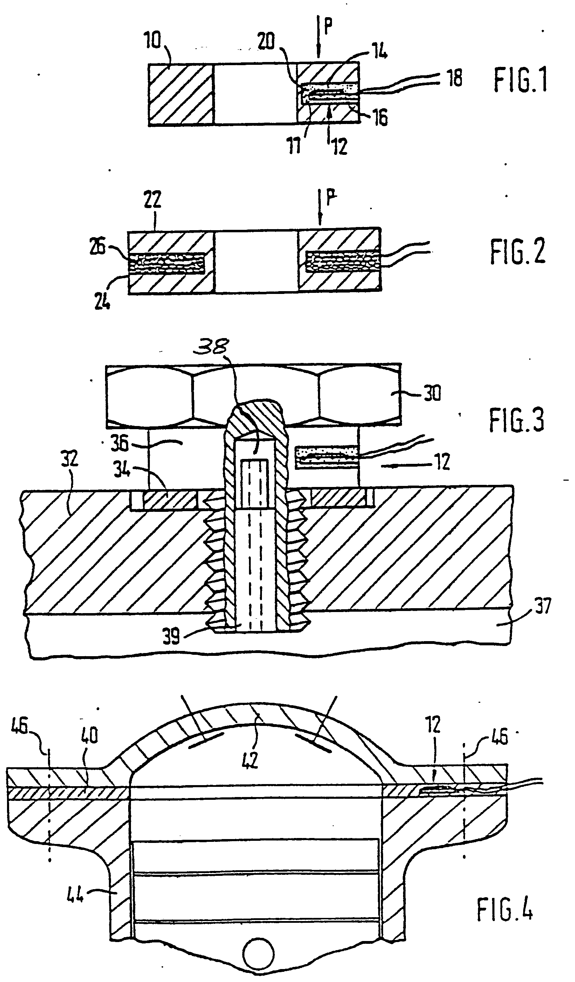

Die in Figur 1 dargestellte Unterlegscheibe 10 ist am Mantelumfang mit einer Nut 11 versehen, die sich über einen Teil des Umfangs erstreckt, jedoch auch rundum laufen kann. In die Nut 11 ist ein als ganzes mit der Bezugszahl 12 bezeichneter Meßwertgeber eingesetzt, der im einzelnen aus einem Dickschichtwiderstand 14 und einem Trägermaterial 16, z. B. Keramik, besteht. Der Dickschichtwiderstand 14, das Trägermaterial 16 und Anschlußdrähte 18 sind mit einer geeigneten Füllmasse 20, wie z. B. Araldit, Thermoplaste o.ä., in die Nut 11 eingegoseen, so daß eine axiale Kraftwirkung P auf die Unterlegscheibe 10 den Dickschichtwiderstand 14 allseitig auf Druck belastet. Die dadurch hervorgerufene Widerstandsänderung kann direkt als Maß für die Kraft P ausgewertet werden. Der Dickschichtwiderstand 14 und das Trägermaterial 16 können so klein dimensioniert werden, daß die Unterlegscheibe anstelle einer handelsüblichen Unterlegscheibe verwendbar ist und dadurch in vorhandenen Konstruktionen Kraftmessungen möglich sind.

Der in Figur 2 dargestellte Dichtring 22 aus relativ hartem Dichtmaterial hat eine umlaufende Nut 24, in die ein Widerstandsdraht 26 mit druckabhängigem elektrischem Widerstandswert in Form einer Spule eingewickelt und entsprechend vergossen ist. Bei dieser Ausführung bildet der zur Spule gewickelte Widerstandsdraht 26 den Druckmeßgeber, welcher durch seinen Widerstandswert den auf den Dichtring 22 ausgeübten axialen Druck P signalisiert.

Bei der Anordnung nach Figur 3 ist eine Entlüftungsschraube 30 in den Boden 32 eines Druckbehälters unter Zwischenlage eines Dichtringes 34 eingeschraubt. Die Entlüftungsschraube 30 hat unter ihrem Schlüsselsechskant einen zylindrischen Abschnitt 36, in welchem wie bei der Unterlegscheibe 10 nach Figur 1 der Meßwertgeber 12 eingesetzt ist. In den Schaft der Schraube 30 ist ein Sackloch 38 eingebracht, welches sich bis in en Bereich des Meßwertgebers 12 erstreckt. In das Sackloch 38 ist ein Bolzen 39 eingesetzt, welcher mit einer zentralen Bohrung und einem im Außendurchmesser abgesetzen Endabschnitt versehen und etwas kürzer als das Sackloch 38 bemessen ist.

Der Druckmeßgeber 12 wird durch die innere Materialspannung der Entlüftungsschraube 30 beaufschlagt, welche durch das Anziehen der Schraube, d.h durch die Anpreßkraft zwischen Schraubenkopf und Boden 32 des Behälters hervorgerufen wird. Diese Materialspannung wird umso mehr abgebaut, je höher der Druck im Inneren 37 des Druckbehälters ist, welcher der Anpreßkraft entgegenwirkt. Durch die Anordnung des Sacklochs 38 wird der Abbau der Materialspannung im Bereich des Druckmeßgebers 12 noch unterstützt. Der Meßwertgeber 12 erfaßt daher diesen Innendruck, ohne daß eine druckdichte Durchführung zum Behälterinneren 37 erforderlich ist.

Beim Ausführungsbeispiel nach Figur 4 ist der Druckmeßgeber 12 in einen Dichtring 40 integriert, der zwischen dem Deckel 42 und dem Gehäuse 44 eines Zylinders einer Brennkraftmaschine angeordnet ist. Die Teile 42 und 44 sind durch Schrauben 46 fest miteinander verbunden, deren Anpreßdruck durch den Innendruck des Zylinders mehr oder weniger vermindert wird. Auf diese Weise erfaßt der Meßwertgeber 12 den Innendruck des Zylinders, ohne daß zusätzliche Bauteile hierfür erforderlich sind.

Neben den hier gezeigten Ausführungsbeispielen sind selbstverständlich noch vielfältige andere Anordnungen und Einsatzmöglichkeiten denkbar. Insbesondere besteht die Möglichkeit, solche druckempfindlichen Widerstände in ganz bestimmten geometrischen Formen herzustellen, wie z. B. Ringe, Rechtecke, Kreise usw., so daß eine Anpassung an vorhandene Geometrien unter Erzielung optimaler Meßbedingungen einfach möglich ist. Es ist auch denkbar, mit mehreren Einzelwiderständen oder Widerstandsnetzwerken bestimmte Flächenmuster zu erzeugen, um beispielsweise die Kraft- oder Druckverteilung innerhalb einer vorgegebenen Geometrie zu erfassen.

## Patentansprüche

1. Einrichtung zum Erfassen von Kräften, Spannungen, Drücken oder Beschleunigungen an Maschinen oder Geräten mit einem elektrischen Meßwertgeber (12, 26), dessen elektrische Eigenschaften druckabhängig sind und der in einem für andere Zwecke ohnehin vorhandenen Bauteil (10, 22, 30, 40) angeordnet ist, das in eingebautem Zustand unter innerer Materialspannung steht, die sich auf den Meßwertgeber (12, 26) überträgt und deren Größe durch die zu erfassenden Kräfte, Spannungen, Drücke oder Beschleunigungen dadurch gekennzeichnet, daß der Meßwertgeber (12, 26) ein niederohmiges Widerstandsbauelement (14, 26), vorzugsweise einen Dickschichtwiderstand (14) enthält.

2. Einrichtung nach Anspruch 1, dadurch gekennzeichnet, daß das Bauteil eine Schraube (30) oder Unterlegscheibe (10) ist.

3. Einrichtung nach Anspruch 2, dadurch gekennzeichnet, daß die Schraube (30) ein bis in den Bereich des Meßwertgebers (12) führendes Sackloch (38) hat.

4. Einrichtung nach Anspruch 3, dadurch gekennzeichnet, daß das Sackloch (38) mindestens teilweise mit Material (39) ausgefüllt ist.

5. Einrichtung nach Anspruch 1 zum Erfassen des Brennraumdruckes einer Brennkraftmaschine, dadurch gekennzeichnet, daß der Meßwertgeber (12) in die Zylinderkopfdichtung (40) eingebaut ist.

## Claims

1. Device for detecting forces, tensions, pressures or accelerations at machines or systems, having an electrical pickup (12, 26), the electrical properties of which are pressure-dependent and which is disposed in a component (10, 22, 30, 40) which is present anyway for other purposes and which, in the incorporated condition, is subject to internal material stress, which is transmitted to the pickup (12, 26) and the magnitude of which is influenced by the forces, tensions, pressures or accelerations to be detected, characterized in that the pickup (12, 26) includes a resistance component (14, 26) of low resistance, preferably a thick-layer resistor (14).

2. Device according to Claim 1, characterized in that the component is a screw (30) or supporting disc (10).

3. Device according to Claim 2, characterized in that the screw (30) has a blind bore (38) leading into the region of the pickup (12).

4. Device according to Claim 3, characterized in that the blind bore (38) is filled, at least partially, with material (39).

5. Device according to Claim 1, for detecting the combustion-chamber pressure of an internal-combustion engine, characterized in that the pickup (12) is incorporated in the cylinder-head gasket (40).

**Revendications**

1. Dispositif de saisie d'efforts, de contraintes, de pressions, ou d'accélérations sur des machines, ou des appareils grâce à un détecteur de mesure (12, 26) électrique dont les propriétés électriques sont dépendantes de la pression et qui est placé dans un composant (10, 20, 30, 40) présent en outre à d'autres fins qui à l'état encastré agit par contrainte interne de la matière, qui est influencée par les efforts, les contraintes, les pressions et les accélérations, caractérisé en ce que le capteur (12, 26) comporte un élément résistant à faible résistance ohmique (14, 26), avantageusement une résistance à couche épaisse (14).

2. Dispositif selon la revendication 1, caractérisé en ce que le composant est une vis (30) ou une rondelle (10).

3. Dispositif selon la revendication 2, caractérisé en ce que la vis (30) comporte un trou borgne (38) allant jusqu'à la zone du capteur (12).

4. Dispositif selon la revendication 3, caractérisé en ce que le trou borgne (38) est au moins partiellement rempli d'un matériau (39).

5. Dispositif selon la revendication 1, pour détecter la pression de la chambre de combustion d'un moteur à combustion interne, caractérisé en ce que le capteur (12) est inséré dans le joint de culasse (40).

FIG.1

FIG.2

FIG.3

FIG.4